# FASCICULE DE BREVET EUROPEEN

(11) **EP 1 544 091 B1**
(45) Date de publication et mention de la délivrance du brevet: **26.04.2006**
(21) Numéro de dépôt: 04292871.3
(22) Date de dépôt: 03.12.2004
(51) Int. Cl.: B62J 15/00, B62L 1/04

(54) **Bicyclette munie d'un dispositif de blocage de roue**
Fahrrad mit einer am Schutzblech angebrachten Bremseinrichtung
Bicycle comprising a braking device attached to the mudguard

(30) Priorité: 18.12.2003 FR 0314920
(43) Date de publication de la demande: 22.06.2005
(73) Titulaire: JCDecaux SA, 92200 Neuilly-Sur-Seine (FR)
(72) Inventeur: Decaux, Jean-Claude, 92200 Neuilly sur Seine (FR)
(74) Mandataire: Louiset, Raphael

(56) Documents cités:
- DE-A- 10 105 804
- DE-U- 20 010 276
- DE-U- 20 017 508
- FR-A- 570 558
- FR-A- 577 212
- US-A1- 2002 113 392

## Description

L'invention a trait à la sécurité des bicyclettes. Elle concerne plus particulièrement une bicyclette ayant une roue surmontée d'un garde-boue.

Les bicyclettes connues, notamment les bicyclettes destinées à un usage urbain, sont généralement équipées de garde-boue surmontant la roue avant et/ou la roue arrière pour éviter que d'éventuelles projections de matière n'atteignent le cycliste. Une bicyclette équipée d'un garde-boue d'après le préambule de la revendication 1 est présentée dans le document FR 577 212.

Il est courant qu'un passager tente de se joindre à l'équipage en venant s'asseoir sur l'un des garde-boue, avant ou arrière.

Le passager vient alourdir la bicyclette, laquelle devient alors difficilement maniable, au détriment de la sécurité non seulement du cycliste et de son passager, mais également des piétons. En outre, le poids du passager tend à la longue à déformer le garde-boue, voir à le rompre. Il se peut même que, du fait de sa flexibilité (il est en effet courant que les garde-boue soient réalisés en matière plastique), le garde-boue vienne frotter contre la roue, ce qui tend à usiner conjointement la gomme de celle-ci et la surface interne du garde-boue.

L'invention vise à résoudre notamment les inconvénients précités, en proposant une bicyclette garantissant au cycliste une sécurité accrue tout en minimisant les risques de détérioration de ses parties constitutives, notamment ses roues et ses garde-boue.

A cet effet, l'invention propose une bicyclette ayant une roue présentant une surface de roulement ainsi qu'un garde-boue surmontant ladite roue et portant un patin réalisé dans un matériau à coefficient de frottement élevé qui fait face à la surface de roulement de la roue, ledit garde-boue étant mobile entre une configuration de repos dans laquelle le patin est écarté de la surface de roulement, et, sous l'effet d'une force exercée sur lui en direction de la roue, une configuration active dans laquelle le patin vient porter contre la surface de roulement pour bloquer la roue.

Ainsi, lorsqu'un passager tente de monter sur la bicyclette en s'asseyant sur le garde-boue, celui-ci adopte sa configuration active en sorte que, sous l'effet du frottement du patin contre la roue, le cycliste se trouve dans l'incapacité, même au prix d'un effort important, de faire avancer la bicyclette.

Dans ces conditions, il devient difficile, voir impossible, que la bicyclette puisse emporter un autre passager que le cycliste lui-même, au bénéfice de la sécurité de ce dernier et des piétons, et de l'intégrité de la bicyclette.

Selon un mode de réalisation, la bicyclette comprend un cadre sur lequel est montée la roue, le garde-boue comprenant quant à lui deux flasques par lesquels il est monté sur ce cadre ; les flasques sont reliés par une portion de jonction présentant une surface interne concave en regard de la surface interne de roulement et sur laquelle est fixé le patin, lesdits flasques étant déformables élastiquement pour permettre au garde-boue d'adopter sa configuration active.

Suivant une alternative, le garde-boue se présente sous la forme d'une pièce arquée à section en forme de U sur laquelle est fixé ledit patin.

Le garde-boue peut être monté pivotant sur le cadre de la bicyclette, entre une position de repos dans laquelle il est écarté de la roue, et une position active dans laquelle le patin vient porter contre la surface de roulement pour bloque la roue.

Le patin est de préférence réalisé dans un élastomère, par exemple en caoutchouc. La fixation du patin au garde-boue peut être réalisée par collage, par co-moulage ou encore par surmoulage.

D'autres objets et avantages de l'invention apparaîtront à la lumière de la description qui va suivre, faite en référence aux dessins annexés dans lesquels :
- la figure 1 est une vue d'élévation de côté montrant une bicyclette équipée de garde-boue ;
- la figure 2 est une vue de côté en coupe partielle montrant une roue de la bicyclette de la figure 1, surmontée d'un garde-boue portant un patin, illustré ici dans une configuration de repos dans laquelle il est écarté de la roue ;
- la figure 3 est une vue similaire à la figure 2, dans laquelle le garde-boue est dans une configuration active dans laquelle le patin vient porter contre la roue ;
- la figure 4 est une vue en coupe suivant le plan IV-IV de la figure 2 ;
- la figure 5 est une vue en coupe suivant le plan V-V de la figure 3.

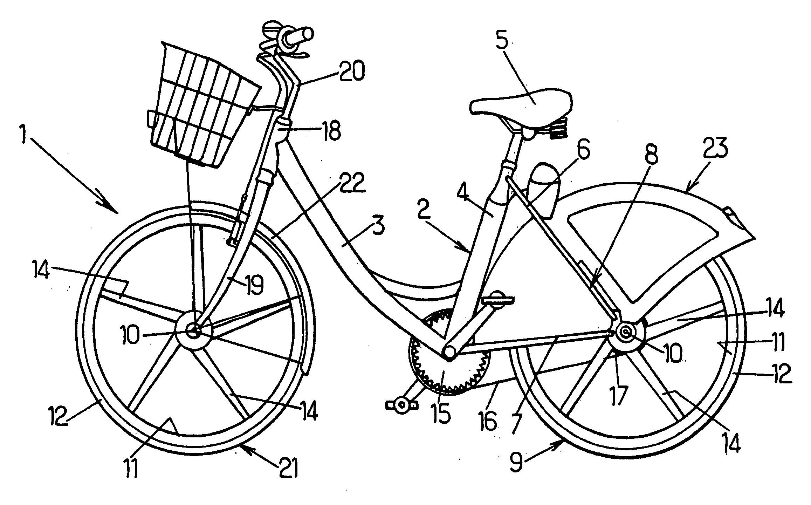

Sur la figure 1 est représentée une bicyclette 1 comportant un cadre 2 ayant un tube diagonal 3, un tube de selle 4 surmonté d'une selle 5, deux haubans 6, et deux bases 7 qui, avec les haubans 6, forment une fourche arrière 8.

Une roue arrière 9 est montée à rotation sur la fourche arrière 8, à la jonction entre les haubans 6 et les bases 7. Cette roue arrière 9 comporte un moyeu 10, une jante 11 sur laquelle est monté un pneu 12 ayant une surface de roulement 13 sensible torique, ainsi que des rayons 14 reliant la jante 11 au moyeu 10.

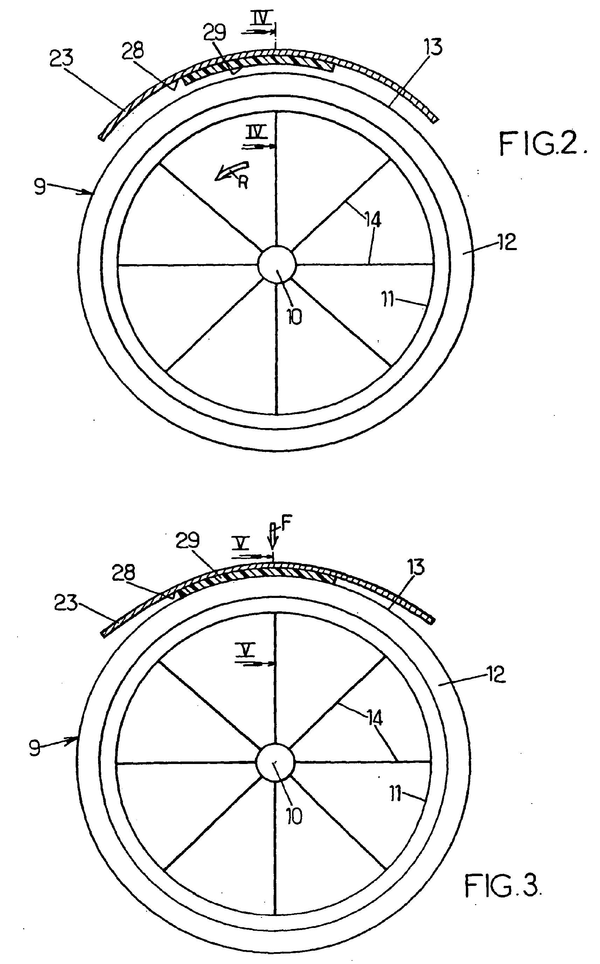

A la jonction entre le tube diagonal 3 et le tube de selle 4 est monté un plateau 15 qui, au moyen d'une chaîne 16, engraine un pignon 17 solidaire du moyeu 10 de la roue arrière 9 pour entraîner celle-ci en rotation (tel qu'indiqué par la flèche R sur la figure 2).

Le cadre 2 comporte par ailleurs un tube de direction 18 sur lequel est montée à rotation une fourche avant 19 solidaire d'un guidon 20.

Une roue avant 21 est montée à rotation sur la fourche avant 19. Cette roue avant 21 comporte, comme la roue arrière 9, un moyeu 10, une jante 11 sur laquelle est monté un pneu 12 ayant une surface de roulement 13 sensible torique, et des rayons 14 reliant la jante 11 au moyeu 10.

Comme cela est visible sur la figure 1, la bicyclette 1 comporte en outre un garde-boue avant 22 sous la forme d'une pièce arquée réalisée dans un matériau métallique ou plastique, pièce dont la courbure épouse celle de la roue avant 21.

Le garde-boue avant 22 présente en section un profil en U et comporte une surface interne concave située en regard du pneu dont elle épouse transversalement la courbure, laquelle est sensiblement circulaire.

La bicyclette 1 comporte en outre un garde-boue arrière 23 surmontant la roue arrière 9, qui comprend deux flasques latéraux 24, 25 situés de part et d'autre de la roue 9, reliés par une portion de jonction 26 arquée dont la courbure épouse sensiblement celle de la roue 9 (figure 2).

Comme cela est visible sur la figure 1, les flasques 24, 25 couvrent un secteur angulaire de la roue 9 et présentent une extrémité inférieure 27 par laquelle le garde-boue 23 est fixé sur la fourche arrière 8 au voisinage du moyeu 10.

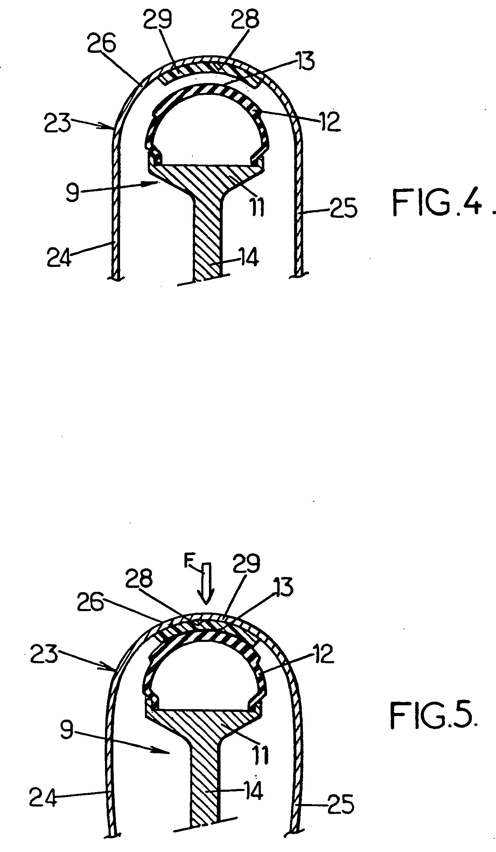

La portion de jonction 26 du garde-boue 23 présente une surface interne 28 concave tournée vers le pneu 12 dont elle épouse sensiblement le contour transversalement (figure 4).

La bicyclette 1 comporte également un patin 29 réalisé dans un matériau à coefficient de frottement élevé tel qu'un élastomère (en pratique un caoutchouc), porté par le garde-boue avant et/ou arrière.

Dans l'exemple illustré sur les figures 2 à 5, ce patin 29 est porté par le garde-boue arrière 23, mais il pourrait tout aussi bien s'agir du garde-boue avant 22.

Quoiqu'il en soit, ce patin 29 se présente sous la forme d'une bande en élastomère rapportée, fixée sur la surface interne 28 de la portion de jonction 26 du garde-boue 23, en regard de la surface de roulement 13 du pneu 12.

La fixation du patin 29 sur le garde-boue 23 peut être réalisée par collage, mais il est également possible de réaliser conjointement le garde-boue 23 et le patin 29 par co-moulage, ou successivement par surmoulage.

Comme cela est illustré sur les figures 2 et 4, le garde-boue 23 adopte, en l'absence de toute sollicitation extérieure, une configuration de repos dans laquelle les flasques 24, 25, sensiblement plans, s'étendent parallèlement aux rayons 14 de la roue 9 et dans laquelle la portion de jonction 26 est suffisamment écartée du pneu 12 pour que le patin 29 ne soit pas en contact avec celui-ci. Dans cette configuration, il est possible de manoeuvrer librement la bicyclette 1.

Par contre, sous l'effet d'une force, représentée par la flèche F sur la figure 3, exercée radialement sur le garde-boue 23 en direction de la roue 9 (par exemple, lorsqu'une personne s'assied ou monte sur le garde-boue 23), celui-ci adopte une configuration active dans laquelle les flasques 24, 25 se bombent et le patin 29 vient porter contre la surface de roulement 13 (figures 3 et 5).

Compte tenu du coefficient de frottement élevé du patin 29, celui-ci empêche alors la roue 9 de tourner. Dans l'hypothèse où la force F est exercée sur le garde-boue 23 lorsque la bicyclette 1 se trouve à l'arrêt, il est alors difficile, voir impossible au cycliste (c'est-à-dire au conducteur principal de la bicyclette 1, normalement assis sur la selle 5), de mettre en mouvement la bicyclette 1, laquelle se trouve ainsi bloquée.

Ainsi, le garde-boue 23 mobile entre sa position de repos et sa position active constitue, en combinaison avec le patin 29, un dispositif de sécurité qui, bloquant la roue 9 lorsqu'un passager tente de s'asseoir sur le garde-boue 23, dissuade le cycliste d'accepter le passager. Il en résulte que seule une utilisation normale de la bicyclette 1 est autorisée, au bénéfice de la sécurité tant du cycliste que des piétons, et de la longévité des divers composants de la bicyclette 1 (notamment du garde-boue 23 et de la roue 9 correspondante).

En l'occurrence, la mobilité du garde-boue 23, entre sa configuration de repos et sa configuration active, est permise par les capacités de déformation élastique du garde-boue 23, résultant du matériau dans lequel celui-ci est réalisé, de préférence une matière plastique telle qu'un polypropylène.

En variante, il est possible de prévoir un mécanisme d'articulation au moyen duquel le garde-boue 23 serait monté pivotant sur le cadre 2 (par exemple, sur les haubans 6) entre une position de repos dans laquelle il serait écarté de la roue 9, et une position active dans laquelle le patin 29 viendrait porter contre la surface de roulement 13 de la roue 9 pour bloquer la rotation de celle-ci. Un ressort pourrait être prévu pour rappeler le garde-boue 23 vers sa position de repos.

## Revendications

1. Bicyclette (1) ayant une roue (9) présentant une surface de roulement (13) ainsi qu'un garde-boue (23) surmontant ladite roue (9, **caractérisé en ce que** le garde-boue porte un patin (29) réalisé dans un matériau à coefficient de frottement élevé faisant face à la surface de roulement (13), et **en ce que** le garde-boue (23) est mobile entre une configuration de repos dans laquelle le patin (29) est écarté de la surface de roulement (13) et, sous l'effet d'une force exercée sur le garde-boue (23) en direction de roue (9), une configuration active dans laquelle ledit patin (29) vient porter contre la surface de roulement (13) pour bloquer la roue (9).

2. Bicyclette (1) selon la revendication 1, qui comprend un cadre (2) sur laquelle est montée ladite roue (9), et dans laquelle le garde-boue (23) comprend deux flasques (24, 25), par lesquels le garde-boue (23) est monté sur le cadre (2), reliés par une portion de jonction (26) présentant une surface interne (28) concave en regard de la surface de roulement (13) et sur laquelle est fixé le patin (29), lesdits flasques (24, 25) étant déformables élastiquement pour permettre au garde-boue (23) d'adopter sa configuration active.

3. Bicyclette (1) selon la revendication 1, dans laquelle ledit garde-boue se présente sous la forme d'une pièce arquée à section en forme de U sur laquelle est fixé ledit patin.

4. Bicyclette (1) selon la revendication 3, qui comporte un cadre (2) sur laquelle le garde-boue est monté pivotant entre une position de repos dans lequel il est écarté de la roue (9), et une position active dans laquelle le patin vient porter contre la surface de roulement pour bloquer la roue.

5. Bicyclette (1) selon l'une des revendications 1 à 4, dans laquelle ledit patin (29) est réalisé dans un élastomère.

6. Bicyclette (1) selon l'une des revendications 1 à 5, dans laquelle le patin (29) est collé sur le garde-boue (23).

7. Bicyclette (1) selon l'une des revendications 1 à 5, dans laquelle le garde-boue (23) et le patin (29) sont conjointement réalisés par co-moulage.

8. Bicyclette (1) selon l'une des revendications 1 à 5, dans laquelle le patin (29) est réalisé par surmoulage.

## Patentansprüche

1. Fahrrad (1), mit einem Rad (9), das eine Lauffläche (13) sowie ein Schutzblech (23) über diesem Rad (9) aufweist,
**dadurch gekennzeichnet,**
**dass** an diesem Schutzblech ein Klotz (29) sitzt, der aus einem Werkstoff mit hohem Reibungskoeffizienten hergestellt ist und sich der Lauffläche (13) gegenüber befindet, und dass das Schutzblech (23) zwischen einer Ruhestellung, bei der sich der Klotz (29) in Abstand von der Lauffläche (13) befindet, und einer Eingriffsstellung, die sich unter der Einwirkung einer auf das Schutzblech (23) in Richtung zum Rad (9) ausgeübten Kraft einstellt und bei der sich dieser Klotz (29) an die Lauffläche (13) anlegt, um das Rad (9) zu bremsen, bewegbar ist.

2. Fahrrad (1) nach Anspruch 1, das einen Rahmen (2) aufweist, an dem dieses Rad (9) angebracht ist, und bei dem das Schutzblech (23) zwei Blendenteile (24, 25) umfasst, mit denen das Schutzblech (23) an dem Rahmen (2) angebracht ist und die durch einen Verbindungsabschnitt (26) miteinander verbunden sind, der eine konkave Innenfläche (28) aufweist, die sich der Lauffläche (13) gegenüber befindet und an der der Klotz (29) befestigt ist, wobei diese Blendenteile (24, 25) elastisch verformbar sind, so dass das Schutzblech (23) seine Eingriffsstellung einnehmen kann.

3. Fahrrad (1) nach Anspruch 1, bei dem das genannte Schutzblech als gebogenes Werkstück mit U-förmigem Querschnitt ausgeführt ist, an dem der genannte Klotz befestigt ist.

4. Fahrrad (1) nach Anspruch 3, an dessen Rahmen (2) das Schutzblech zwischen einer Ruhestellung, bei der es sich in Abstand von dem Rad (9) befindet, und einer Eingriffsstellung, bei der sich der Klotz an die Lauffläche anlegt, um das Rad zu bremsen, schwenkbar angebracht ist.

5. Fahrrad (1) nach einem der Ansprüche 1 bis 4, bei dem der Klotz (29) aus einem Elastomer hergestellt ist.

6. Fahrrad (1) nach einem der Ansprüche 1 bis 5, bei dem der Klotz (29) an dem Schutzblech (23) angeklebt ist.

7. Fahrrad (1) nach einem der Ansprüche 1 bis 5, bei dem das Schutzblech (23) und der Klotz (29) zusammen durch gemeinsames Formen hergestellt sind.

8. Fahrrad (1) nach einem der Ansprüche 1 bis 5, bei dem der Klotz (29) durch Überformen hergestellt ist.

## Claims

1. Bicycle (1) having a wheel (9) with a tread surface (13) and a mudguard (23) surmounting said wheel (9), **characterised in that** the mudguard holds a shoe (29) made from a material having a high coefficient of friction and facing the tread surface (13), and **in that** the mudguard (13) is movable between a rest configuration, in which the shoe (29) is set apart from the tread surface (13), and, under the effect of a force exerted onto the mudguard (23) in the direction of the wheel (9), an active configuration, in which said shoe (29) comes to bear against the tread surface (13) for locking the wheel (9).

2. Bicycle (1) according to claim 1, comprising a frame (2), on which said wheel (9) is mounted, and in which the mudguard (23) comprises two tyre flaps (24, 25), via which the mudguard (23) is mounted on the frame (2), which flaps have an adjoining portion (26) that has a concave internal surface (28) facing the tread surface (13) and to which the shoe (29) is fixed, said flaps (24, 25) being elastically deformable to allow the mudguard (23) to adopt its active configuration.

3. Bicycle (1) according to claim 1, wherein said mudguard is in the form of an arched part that has a U-shaped cross-section and to which said shoe is fixed.

4. Bicycle (1) according to claim 3, comprising a frame (2), on which the mudguard is mounted so as to pivot between a rest position, in which it is set apart from the wheel (9), and an active position, in which the shoe comes to bear against the tread surface for locking the wheel.

5. Bicycle (1) according to any one of claims 1 to 4, wherein said shoe (29) is made from an elastomer.

6. Bicycle (1) according to any one of claims 1 to 5, wherein the shoe (29) is bonded to the mudguard (23).

7. Bicycle (1) according to any one of claims 1 to 5, wherein the mudguard (23) and the shoe (29) are produced together by co-moulding.

8. Bicycle (1) according to any one of claims 1 to 5, wherein the shoe (29) is produced by over-moulding.
